# EUROPÄISCHE PATENTSCHRIFT

(11) **EP 0 473 953 B1**
(45) Veröffentlichungstag und Bekanntmachung des Hinweises auf die Patenterteilung: **15.02.1995**
(21) Anmeldenummer: 91113179.5
(22) Anmeldetag: 06.08.1991
(51) Int. Cl.: B65G 17/24, B65G 17/42, B65G 47/26

(54) **Gurtförderer**
Belt conveyor
Transporteur de courroie

(30) Priorität: 05.09.1990 DE 4028130
(43) Veröffentlichungstag der Anmeldung: 11.03.1992
(73) Patentinhaber: Dürr GmbH, D-70435 Stuttgart (DE)
(72) Erfinder: Schlauch, Peter, W-7101 Ellhofen (DE); Weeber, Heinrich, W-7144 Asperg (DE); Martin, Wolfram, W-7141 Erdmannhausen (DE)
(74) Vertreter: Hoeger, Stellrecht & Partner

(56) Entgegenhaltungen:
- EP-A- 0 104 366
- EP-A- 0 277 258
- EP-A- 0 391 247
- DE-A- 3 319 819
- DE-A- 3 445 249
- DE-A- 3 542 927
- DE-A- 3 714 976
- US-A- 4 793 473

## Beschreibung

Die Erfindung betrifft einen Gurtförderer mit einem Fördergurt, der eine sich in Gurtlängsrichtung erstreckende unelastische Verstärkungseinlage aufweist, und mit längs des Fördergurts auf einer Gurtseite angeordneten und mit dem Fördergurt verbundenen Rollenträgern, welche in beiderseitig derselben angeordneten Führungsbahnprofilschienen laufende Tragrollen aufweisen.

Insbesondere betrifft die Erfindung einen Staurollen-Gurtförderer, wie er aus der EP-A 0 277 258 bekannt geworden ist.

Aus der vorgenannten europäischen Patentanmeldung ist ein Staurollen-Gurtförderer bekannt, welcher einen Fördergurt aufweist, längs welchem auf einer Gurtseite an den Fördergurt gummielastische Lageraugen anvulkanisiert sind, wobei an jedem Lagerauge mittels eines Querbolzens ein Rollenträger angelenkt ist, welcher von dem zugeordneten Lagerauge geschleppt wird und in Förderrichtung hinter dem letzteren eine Rollenachse trägt, die zu beiden Seiten des Rollenträgers jeweils eine Tragrolle und dazwischen, nämlich im Rollenträger und diesen überragend, eine Staurolle hält.

Der Nachteil dieses Gurtförderers ist darin zu sehen, daß dieser durch die elastische Verbindung zwischen dem Rollenträger und dem Fördergurt den rauhen Betriebsbedingungen - insbesondere beim Skidtransport - nicht gewachsen ist.

Ferner ist aus der nicht vorveröffentlichten EP-A-0 391 247 ein Gurtförderer bekannt, der an einem Fördergurt gehaltene Rollenträger aufweist, die ihrerseits mit Tragrollen in Führungsbahnprofilschienen laufen.

Aus der EP-A-0 104 366 ist ein Kettenförderer bekannt, wobei generell bei Kettenförderern aufgrund des Vorhandenseins der Kette eine derartige Längssteifigkeit von vornherein gegeben ist, daß sich das Problem eines ruhigen, schwingungs- und schlagfreien Laufs bei rauhen Betriebsbedingungen gar nicht stellt.

Die in dieser Druckschrift offenbarten Gleitstücke dienen dazu, ein seitliches Koppen der lediglich mittig auf einer Gleitleiste geführte Kette zu verhindern, wobei es sich bei dieser um eine Laschenkette handelt, bei welcher aufgrund ihrer Eigensteifigkeit das Problem der Drehung um eine senkrecht auf der Führungsebene stehende Achse überhaupt nicht auftreten kann.

Der Erfindung liegt daher ausgehend von der EP-A-0 277 258 die Aufgabe zugrunde, den Gurtförderer der gattungsgemäßen Art derart zu verbessern, daß dieser sich für rauhe Betriebsbedingungen besser eignet.

Diese Aufgabe wird bei einem Gurtförderer der eingangs beschriebenen Art erfindungsgemäß dadurch gelöst, daß der Rollenträger in Förderrichtung im Abstand voneinander sich an mindestens einer der Führungsbahnprofilschiene abstützende Führungselemente aufweist und daß der Rollenträger an mindestens einer Führungsbahnprofilschiene gegen ein Verdrehen um eine senkrecht auf einer Führungsebene der Führungsbahnprofilschiene stehende Achse und/oder gegen ein Kippen um eine quer zu einer Förderrichtung verlaufende Kippachse durch die Führungselemente gesichert ist.

Die Eignung eines Gurtförderers für rauhe Betriebsbedingungen und somit die Stabilität der Verbindung zwischen dem Rollenträger und dem Fördergurt hängt in erheblichem Maße aber auch davon ab, daß der Gurtförderer ruhig, d.h. schwingungs- und schlagfrei läuft, da auf den Rollenträger wirkende Schwingungen und Schläge in erheblichem Maße dazu beitragen die Verbindung zwischen dem den Rollenträger ziehenden Fördergurt zu beanspruchen und gegebenenfalls zu lockern.

Ein besonders ruhiger Lauf des erfindungsgemäßen Gurtförderers wird dadurch erreicht, daß die zwei Führungselemente in Förderrichtung im Abstand voneinander an der Führungsprofilschiene angreifen, so daß eine Führung des Rollenträgers durch mindestens zwei im Abstand voneinander liegende Punkte an einer Führungsbahnprofilschiene erfolgt.

Durch das Anordnen der Führungselemente wird ein wesentlich ruhigerer Lauf des Rollenträgers in den Führungsbahnprofilschienen erreicht und dadurch die Belastung der Verbindung zwischen dem Fördergurt und den dem Rollenträger in erheblichem Maße reduziert.

Aus denselben Gründen wird alternativ oder ergänzend zur Sicherung gegen ein Verdrehen vorgesehen, daß der Rollenträger in beidseitig desselben angeordneten Führungsbahnprofilschienen laufende Tragrollen aufweist und daß der Rollenträger an mindestens einer Führungsprofilschiene gegen eine Kippen um eine quer zu einer Förderrichtung verlaufende Kippachse durch die Führungselemente geführt ist.

Auch für diese Maßnahme wird ein ruhigerer Lauf des erfindungsgemäßen Gurtförderers und damit eine wesentlich geringere Beanspruchung der Verbindung zwischen dem Rollenträger und dem Fördergurt erreicht.

Konstruktiv einfach läßt sich dies dadurch lösen, daß eines der Führungselemente in Förderrichtung vor der Tragrolle angeordnet ist.

Eine alternative bevorzugte Lösung sieht vor, daß eines der Führungselemente in Förderrichtung hinter der Tragrolle angeordnet ist.

Besonders zweckmäßig ist es, wenn eines der Führungselemente in Förderrichtung vor und das andere in Förderrichtung hinter der Tragrolle angeordnet ist und somit der Rollenträger an zwei Punkten, d.h. vor und hinter der Tragrolle, an der Führungsbahnprofilschiene geführt ist.

Im Rahmen der Erfindung hat es sich als vorteilhaft erwiesen, wenn sich das Führungselement an einer Seitenwange der Führungsprofilschiene abstützt um ein Verdrehen um die senkrecht auf der Führungsebene stehende Achse zu unterbinden.

Darüberhinaus ist es vorteilhaft, wenn das Führungselement sich auf einer Laufbahn der Tragrolle abstützt, um ein Kippen um die quer zur Förderrichtung verlaufende Kippachse zu verhindern.

Ferner hat es sich für die Stabilität der Führung der Rollenträger als vorteilhaft erwiesen, wenn der Rollenträger durch mindestens ein Führungselement gegen eine Verschiebung quer zur Förderrichtung in den Führungsprofilschienen abgestützt ist. Dadurch wird eine weitere Quelle für einen unruhigen Lauf des Gurtförderers eliminiert.

Hinsichtlich der Ausbildung der Führungselemente wurden bislang keine näheren Angaben gemacht. Die konstruktiv einfachste Lösung ist jedoch die, daß eines der Führungselemente als Führungsklotz, vorzugsweise aus Kunststoff, ausgebildet ist.

Im Rahmen der erfindungsgemäßen Lösung ist es ferner besonders vorteilhaft, wenn die Rollenträger mit dem Fördergurt durch mindestens ein die von den Verstärkungseinlagen gebildete Ebene im Fördergurt durchgreifendes Verbindungselement im wesentlichen unelastisch verbunden sind.

Durch diese erfindungsgemäße Lösung, insbesondere das die Verstärkungseinlage durchgreifende Verbindungselement, ist eine Verbindung zwischen dem Rollenträger und dem Fördergurt geschaffen, die größten Belastungen Stand hält und dabei konstruktiv einfach zu realisieren ist.

Dadurch, daß nunmehr die Krafteinleitung im wesentlichen direkt in die Verstärkungseinlage des Fördergurts erfolgt, die ihrerseits nicht elastisch ist und über welche der größte Teil der Zugkräfte übertragen wird, eignet sich der erfindungsgemäße Gurtförderer beispielsweise besser zum Skidtransport für Pkw-Karosserien, bei welchen teilweise nur für die einen Skidkurven ein erfindungsgemäßer Gurtförderer eingesetzt wird, während die anderen Skidkurven auf einer Rollenbahn entlang laufen. Insbesondere für einen solchen Verwendungszweck ist der erfindungsgemäße Gurtförderer besser geeignet als der eingangs im Zusammenhang mit dem Stand der Technik bekannte Gurtförderer, weil beim Vorschieben der nur einen Skidkurve mit Hilfe eines erfindungsgemäßen Gurtförderers dessen Rollenträger viel weniger zu einem seitlichen Ausschwenken neigen als die durch die aufvulkanisierten elastischen Lageraugen geschleppten Rollenträger des als Stand der Technik beschriebenen bekannten Gurtförderers.

Die erfindungsgemäße Lösung läßt sich nun auf vielfältige Art realisieren. Beispielsweise ist es in erfindungsgemäßer Weise denkbar, den Gurt als Ganzes mit einem die Verstärkungseinlage durchgreifenden Verbindungselement zu fassen.

Besonders vorteilhaft ist es jedoch, wenn das Verbindungselement der Verstärkungseinlage im wesentlichen unmittelbar benachbart im Fördergurt angreift, wobei es besonders günstig ist, wenn das Verbindungselement im wesentlichen an der Verstärkungseinlage angreift, da dadurch eine unmittelbare Krafteinleitung in die Verstärkungseinlage gewährleistet ist.

Hinsichtlich des Angreifens an der Verstärkungseinlage durch das Verbindungselement sind mehrere Möglichkeiten denkbar. Besonders einfach und vorteilhaft, insbesondere bei geringstmöglicher Beschädigung der Verstärkungseinlage, ist es, wenn das Verbindungselement ein Klemmteil aufweist und wenn mit dem Klemmteil die Verstärkungseinlage eingespannt gehalten ist, so daß insbesondere eine Krafteinleitung in den Teil der Verstärkungseinlage möglich ist, welcher ohne mechanische Unterbrechung durch das Verbindungselement durch den Fördergurt hindurchläuft.

Die einfachste Möglichkeit, die Verstärkungseinlage einzuspannen ist die, daß die Verstärkungseinlage zwischen dem Klemmteil und dem Rollenträger eingespannt gehalten ist, d.h. daß das Klemmteil die Verstärkungseinlage gegen den Rollenträger drückt.

Bezüglich der Ausbildung des Verbindungselements sind mehrere Möglichkeiten denkbar. Die konstruktiv einfachste Lösung sieht dabei vor, daß das Verbindungselement eine Schraube umfaßt.

Erfindungsgemäß ist es denkbar, mit dieser Schraube ein separates Klemmteil, beispielsweise einen Klemmbacken, beaufschlagen und mit diesem Klemmbacken die Verstärkungseinlage zwischen diesem und dem Rollenträger einzuklemmen. Noch einfacher ist es jedoch, wenn die Schraube mit einem auf die Verstärkungseinlage wirkenden Klemmkopf versehen ist, so daß ein separater Klemmbacken nicht erforderlich ist.

Auch der Aufbau des erfindungsgemäßen Fördergurts schafft die Möglichkeit, durch geeignete Maßnahmen die Steifigkeit der Verbindung zwischen dem Rollenträger und der Verstärkungseinlage zu verbessern. So sieht ein vorteilhaftes Ausführungsbeispiel vor, daß die von der Verstärkungseinlage aufgespannte Ebene asymetrisch im Fördergurt angeordnet ist.

Um die Verbindung zwischen dem Fördergurt und dem Rollenträger noch stabiler zu machen, ist vorteilhafterweise in Förderrichtung hinter dem Verbindungselement noch ein am Fördergurt gehaltenes und in eine Führungsausnehmung am Rollenträger eingreifendes Führungselement vorgesehen.

Vorzugsweise ist dieses Führungselement so ausgebildet, daß dieses die von den Verstärkungseinlagen gebildete Ebene im Fördergurt durchgreift und mit diesem im wesentlichen unelastisch verbunden ist.

Im einfachsten Fall handelt es sich bei dem Führungselement ebenfalls um eine am Fördergurt gehaltene Schraube, welche im wesentlichen an der Verstärkungseinlage angreift.

Besonders vorteilhaft ist es jedoch dabei, wenn die Ebene einen geringeren Abstand von der dem Rollenträger zugewandten Gurtseite aufweist als von der gegenüberliegenden, dem Rollenträger abgewandten Gurtseite. Dadurch ist sichergestellt, daß die Verstärkungseinlage bereits im Fördergurt möglichst nahe beim Rollenträger angeordnet ist und somit in einfacher Weise eine möglichst unmittelbare Verbindung zwischen der Verstärkungseinlage und dem Rollenträger herstellbar ist.

Hinsichtlich der Aufnahme des Klemmteils in dem Fördergurt wurden bislang keine näheren Angaben gemacht. So sieht ein besonders bevorzugtes Ausführungsbeispiel vor, daß der Fördergurt eine Ausnehmung zur vollständigen Aufnahme des Klemmteils aufweist. Dieses Vorsehen einer Ausnehmung schafft nicht nur die Möglichkeit, einen möglichst ruhigen Lauf des Gurtförderers zu gewährleisten, da das Klemmteil nicht über den Fördergurt übersteht, es schafft aber zudem noch die Möglichkeit, dadurch das Klemmteil möglichst nahe bei der Verstärkungseinlage zu positionieren.

Konstruktiv besonders einfach ist eine Lösung, bei welcher die Ausnehmung zu der dem Rollenachsträger abgewandten Gurtseite hin offen ist, so daß sich das Klemmteil von dieser Seite her in einfacher Weise in die Ausnehmung einsetzen läßt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Querschnitt durch einen Abschnitt eines ersten Ausführungsbeispiels eines erfindungsgemäßen Gurtförderers längs Linie 1-1 in Fig. 2;
- Fig. 2: einen Längsschnitt durch einen Abschnitt des ersten Ausführungsbeispiels des erfindungsgemäßen Gurtförderers längs Linie 2-2 in Figur 3 mit teilweise aufgebrochenem Rollenträger;
- Fig. 3: eine Draufsicht auf einen Abschnitt des ersten Ausführungsbeispiels des erfindungsgemäßen Gurtförderers;

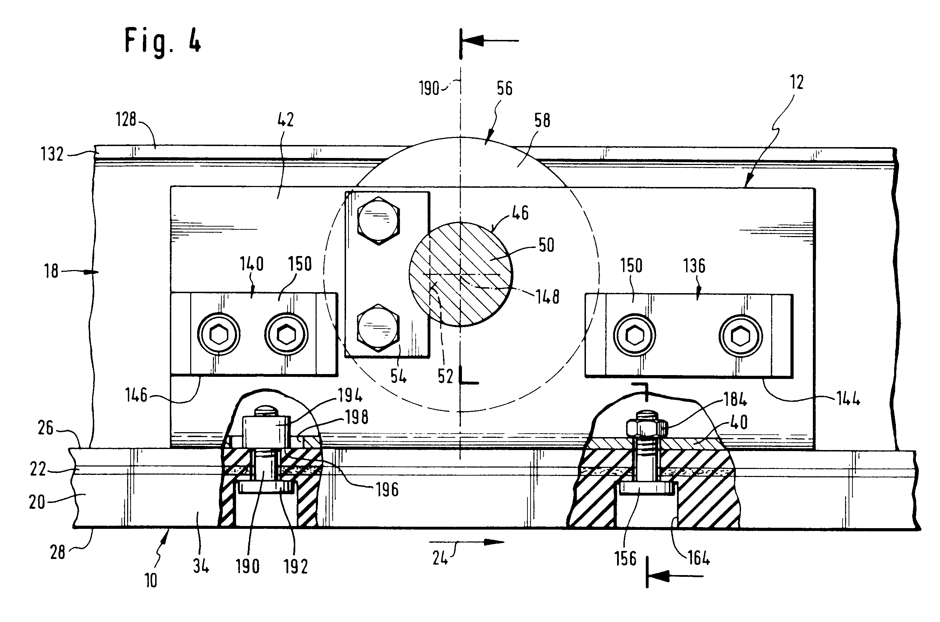

- Fig. 4: einen Längsschnitt ähnlich Fig. 2 durch ein zweites Ausführungsbeispiel und
- Fig. 5: einen Längsschnitt ähnlich Fig. 3 durch das zweite Ausführungsbeispiel.

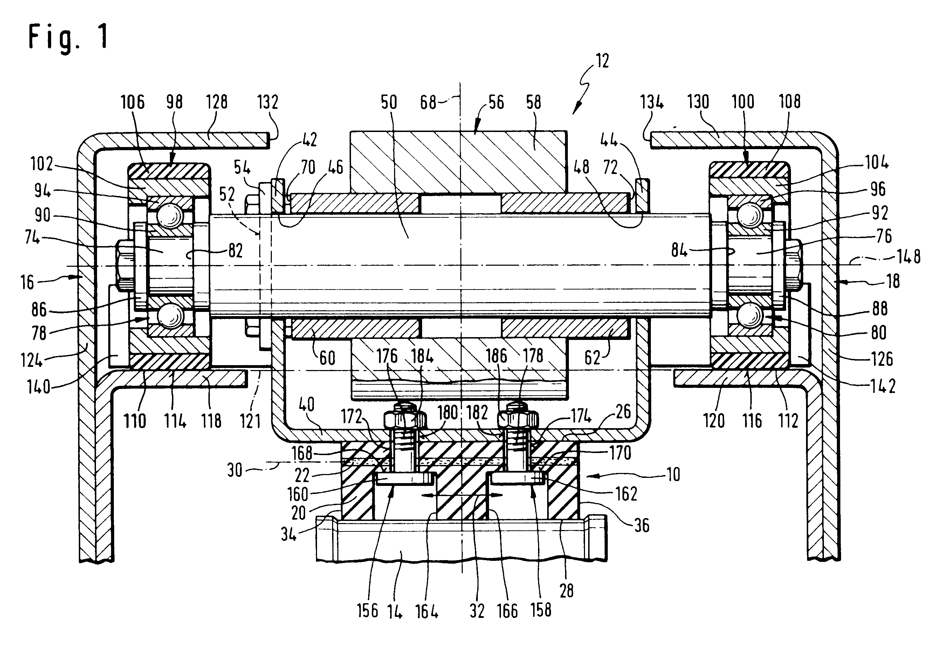

Ein Ausführungsbeispiel eines erfindungsgemäßen Staurollen-Gurtförderers, dargestellt in den Fig. 1 bis 3, umfaßt einen als Ganzes mit 10 bezeichneten Fördergurt, welcher einen als Ganzes mit 12 bezeichneten Rollenträger schleppt, wobei der Fördergurt 10 als Endlosgurt auf mindestens zwei in Umlenkbereichen angeordneten Stützrädern 14 des Staurollen-Gurtförderers läuft.

Außerdem ist der Rollenträger 12 noch durch zwei seitlich desselben angeordnete Führungsbahnprofilschienen 16 und 18 geführt.

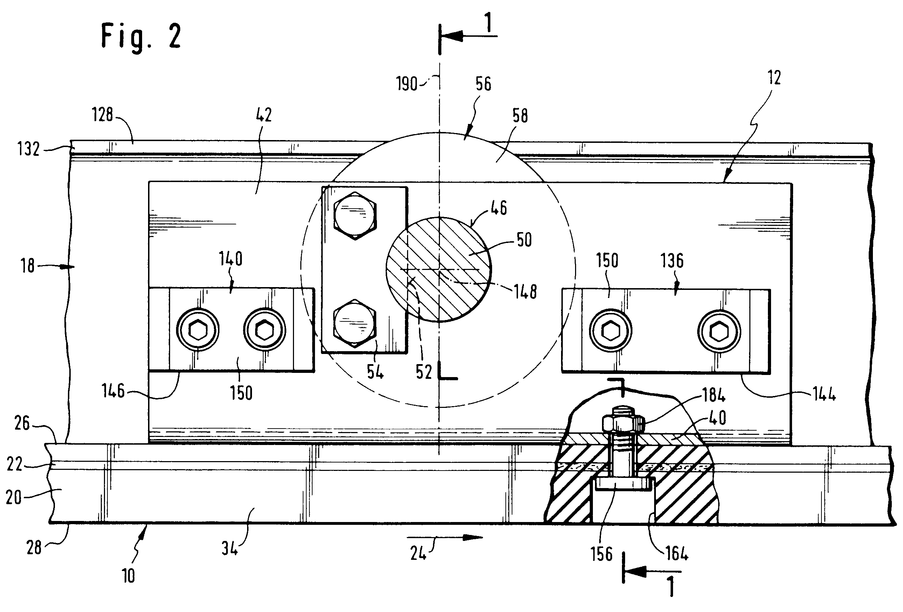

Der Fördergurt 10 ist dabei, wie in Fig. 1 und 2 dargestellt, so aufgebaut, daß er einen Körper 20 mit einem im wesentlichen rechteckförmigen Querschnitt aufweist, der aus gummielastischem Material hergestellt ist. In diesen Körper 20 ist eine Verstärkungseinlage 22 eingelegt, welche sich in Förderrichtung 24 längs des Fördergurts 10 erstreckende Fasern aufweist, die in einer vorzugsweise parallel zu einer Oberseite 26 und einer Unterseite 28 des Fördergurts 10 verlaufenden Ebene 30 liegen und sich in einer quer zur Förderrichtung 24, verlaufenden Querrichtung 32 erstrecken. Vorzugsweise erstreckt sich die Verstärkungseinlage 22 von einer den Fördergurt 10 begrenzenden Seitenfläche 34 zur gegenüberliegenden Seitenfläche 36 und ist so angeordnet, daß deren Abstand von der Oberseite 26 geringer ist als von der Unterseite 28.

Die Verstärkungseinlage 22 gibt dem Fördergurt 10 sowohl in der Förderrichtung 24 als auch in der Querrichtung 32 die erforderliche Stabilität, insbesondere um die Rollenträger 12 zu ziehen. Die Verstärkungseinlage 22 ist unelastisch und kann in unterschiedlichster Art und Weise ausgebildet sein. Beispielsweise kann diese aus in Gurtlängsrichtung verlaufenden Stahlseilen, Metallgewebebändern, Aramid- oder Kevlar-Fasern bestehen.

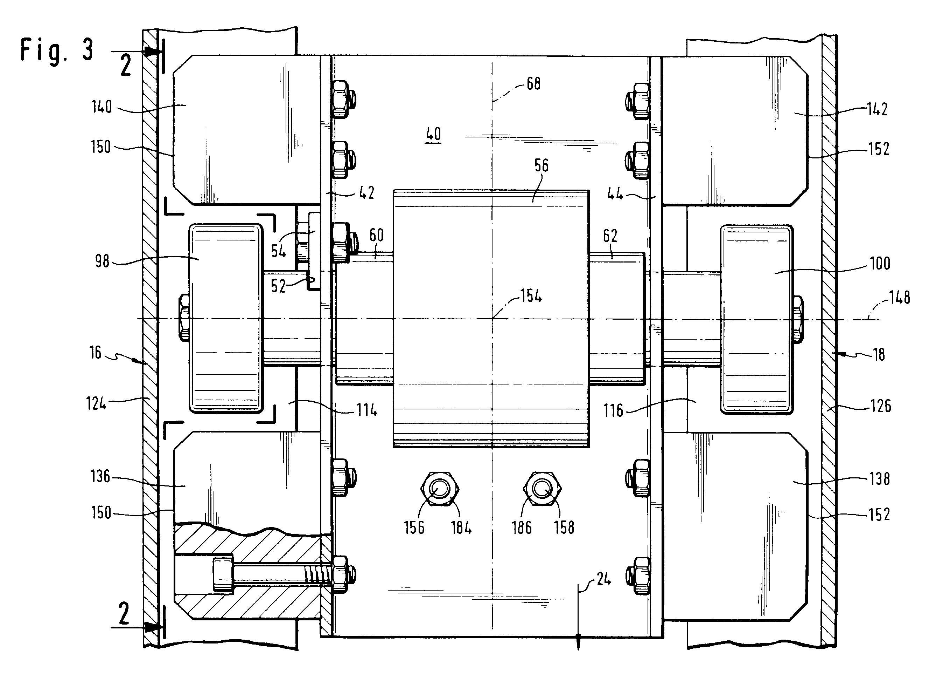

Der Rollenträger 12 umfaßt seinerseits einen im wesentlichen U-förmigen Rahmen mit einem Boden 40 und zwei senkrecht von dem Boden beiderseits desselben abstehenden Seitenwangen 42 und 44. Die beiden Seitenwangen 42 und 44 sind auf einander gegenüberliegenden Seiten mit jeweils einer Bohrung 46 bzw. 48 versehen, durch die eine Achse 50 gesteckt ist, die sich in der Querrichtung 32 senkrecht zur Förderrichtung 24 erstreckt. Diese Achse 50 ist dabei an dem Rollenträger dadurch fixiert, daß sie, wie in Fig. 3 dargestellt ist, einen unmittelbar neben der Seitenwange 42 liegenden Einschnitt 52 aufweist, in welchen eine an die Seitenwange 42 anschraubbare Sicherungsplatte 54 eingreift. Somit ist eine Verschiebung der Achse 50 in der Querrichtung 32 und eine Verdrehung derselben nicht mehr möglich.

Zwischen den beiden Seitenwangen 42 und 44 ist auf der Achse 50 eine als Ganzes mit 56 bezeichnete Staurolle angeordnet, welche einen zylindrischen Rollenkörper 58 aufweist, der koaxial zur Achse 50 angeordnet ist und sich auf zwei Gleitbuchsen 60 und 62 abstützt, die unmittelbar auf der Achse 50 sitzen und einen Abstand voneinander aufweisen.

Vorzugsweise sind die Gleitbuchsen 60 und 62 symmetrisch zu einer Mittelebene 68 angeordnet und laufen mit ihren äußeren Stirnflächen 70 und 72 in geringem Abstand von den Seitenwangen 42 und 44, so daß sie in ihrer symmetrischen Position zur Mittelebene 68 von den die Stirnflächen 70 und 72 positionierenden Seitenwangen 42 und 44 geführt sind.

Erfindungsgemäß ist der Rollenkörper 58 fest mit den Gleitbuchsen 60 und 62 verbunden, so daß der Rollenkörper 58 mit den Gleitbuchsen 60 und 62 eine in sich starre Einheit bildet.

An ihren beiden äußeren Enden ist die Achse 50 jeweils mit einem zylindrischen Ansatz 74, 76 versehen, auf welchem ein Drehlager 78, 80 sitzt, welches vorzugsweise als Wälzlager ausgebildet ist. Dieses Drehlager 78, 80 liegt einerseits an einer Ringfläche 82, 84 an, gegen welche es durch eine außen auf den zylindrischen Ansatz 74 aufgeschraubte Scheibe 86 bzw. 88 gedrückt ist, so daß die Drehlager 78, 80 jeweils durch die Scheibe 86 und die Ringfläche 82 bzw. 88 und 84 in Querrichtung auf der Achse mit ihrem inneren Lagerring 90 bzw. 92 fixiert sind.

Ein äußerer Lagerring 94 bzw. 96 der Drehlager 78 bzw. 80 trägt eine Tragrolle 98 bzw. 100, welche einen zylindrischen Rollenkörper 102 bzw. 104 aus Metall sowie einen diesen Rollenkörper 102 bzw. 104 umgebende elastische Auflage 106 bzw. 108 umfaßt.

Diese elastischen Auflagen 106 bzw. 108 laufen mit ihren Mantelflächen 110 bzw. 112 auf einer Lauffläche 114 bzw. 116 einer Führungsbahnlaufschiene 118 bzw. 120, welche Teil der Führungsbahnprofilschiene 16 bzw. 18 ist. Durch die Laufflächen wird eine Führungsebene 121 für den Rollenträger 12 festgelegt.

Die Führungsbahnschienen 16 und 18 weisen ferner noch jeweils eine Führungsbahnseitenwange 124, 126 auf, welche über die Laufflächen 114 bzw. 116 nach oben überstehen und an welche sich die Tragrollen 98, 100 auf ihren den Laufflächen 114, 116 gegenüberliegenden Seiten berührungslos übergreifende Abdeckleisten 128 bzw. 130 anschließen, welche sich vorzugsweise so weit in Richtung zur Mittelebene 68 erstrecken, daß deren Innenkanten 132 bzw. 134 in etwa in Höhe der Seitenwangen 42 bzw. 44 des Rollenträgers 12 liegen. Zur Führung des Rollenträgers 12 in den Führungsbahnprofilschienen 16, 18 sind ferner an den Seitenwangen 42 bzw. 44, wie insbesondere in Fig. 3 dargestellt, jeweils in Förderrichtung 24 vor den Tragrollen 98, 100 liegende vordere Führungsklötze 136 bzw. 138 gehalten sowie bezüglich der Förderrichtung 24 hinter den Tragrollen 98, 100 liegende hintere Führungsklötze 140 bzw. 142, die sich jeweils in die Führungsbahnprofilschienen 16, 18 hinein erstrecken und von den Laufflächen 114, 116 mit ihren Unterseiten 144, 146 gleitend geführt sind. Mittels dieser Führungsklötze 136 bis 142 wird somit ein Kippen des Rollenträgers 12 um eine eine Kippachse bildende geometrische Achse 148 der Achse 50 vermieden.

Ferner erstrecken sich die Führungsklötze 136 bis 142 so weit in die Führungsbahnprofilschienen 16, 18 hinein, daß deren den Führungsbahnseitenwangen 124 bzw. 126 zugewandte Stirnflächen 150 bzw. 152 in geringem Abstand von den Führungsbahnseitenwangen 124 bzw. 126 laufen und damit den Rollenträger 12 in den Führungsbahnprofilschienen 16, 18 in Förderrichtung 24 führen und insbesondere ein Verkanten des Rollenträgers 12 durch Drehung desselben um eine senkrecht auf der Führungsebene 121 des Rollenträgers 12 stehende Achse 154 vermeiden.

Der Rollenträger 12 ist zur Verbindung mit dem Fördergurt 10 mit seinem Boden 40 auf die Oberseite 26 des Fördergurts aufgelegt und wird, wie in Fig. 1 und 2 dargestellt, durch zwei Schrauben 156, 158 gehalten. Diese Schrauben liegen mit ihren Schraubköpfen 160 bzw. 162 in Sacklöchern 164 bzw. 166 des Körpers 20, die sich von der Unterseite 28 so weit in den Körper 20 hinein erstrecken, daß sie im wesentlichen bei oder in geringem Abstand von der Verstärkungseinlage 22 enden und jeweils eine Ringfläche 168 bzw. 170 bilden, auf welcher die Schraubenköpfe 160 bzw. 162 aufliegen und die um die Ringflächen 168, 170 verlaufen, um Durchstecköffnungen 172 bzw. 174 herum, welch letztere sowohl die Verstärkungseinlage 22 als auch den Körper 20 bis zur Oberseite 26 hin durchsetzen und durch welche Gewindestücke 176 bzw. 178 der Schrauben 156 bzw. 158 durchgreifen.

Die Gewindestücke 176 bzw. 178 der Schrauben 156 bzw. 158 durchgreifen ferner noch Bohrungen 180 bzw. 182 im Boden 40 des Rollenträgers 12 und tragen Muttern 184 bzw. 186.

Mit diesen Muttern 184 bzw. 186 werden die Schrauben 156 bzw. 158 so angezogen, daß deren Schraubenköpfe 160 bzw. 162 gegen die Verstärkungseinlage 22 drücken und diese wiederum mit dem zwischen der Verstärkungseinlage 22 und der Oberseite 26 liegenden Teil des Körpers 20 gegen den Boden 40 des Rollenträgers 12 pressen. Durch diesen Angriff der Schrauben 156 bzw. 158 im wesentlichen unmittelbar nahe der Verstärkungseinlage oder vorzugsweise an dieser selbst ist sichergestellt, daß eine möglichst starre Verbindung zwischen der starren Verstärkungseinlage 22 und dem Rollenträger 12 existiert, die möglichst keine, höchstenfalls jedoch eine unwesentliche Relativbewegung des Rollenträgers 12 relativ zur Verstärkungsanlage 22 und somit zum Fördergurt 10 zuläßt.

Vorzugsweise sind die Schrauben 156 bzw. 158 so angeordnet, daß sie in Förderrichtung vor einer durch die geometrische Achse 148 der Achse 50 hindurch verlaufenden und senkrecht auf der Oberseite 26 des Fördergurts 10 stehenden Querschnittsebene 190 liegen, um eine Deformation des Fördergurts 10 während des Schleppens des Rollenträgers 12 zu vermeiden.

Durch den über die vorstehend genannte Verbindung zwischen dem Fördergurt 10 und dem Rollenträger 12 erfolgende Zugbewegung der Rollenträger 12 wird dieser in den Führungsbahnprofilschienen 16 und 18 vorwärts gezogen, wobei eine Sicherung gegen ein Verkanten durch Drehung um die Mittelachse 154 und ein Verkippen durch Kippen um die Kippachse 148 über die Führungsklötze 136 bis 142 erfolgt und somit ein ruhiger Lauf des Rollenträgers 12 in den Führungsbahnprofilschienen 16 und 18 gewährleistet ist.

Ein zweites Ausführungsbeispiel eines erfindungsgemäßen Gurtförderers ist insoweit, als dieselben Teile Verwendung finden, mit dem ersten Ausführungsbeispiel identisch. Diesbezüglich wird auf die Ausführungen zum ersten Ausführungsbeispiel Bezug genommen.

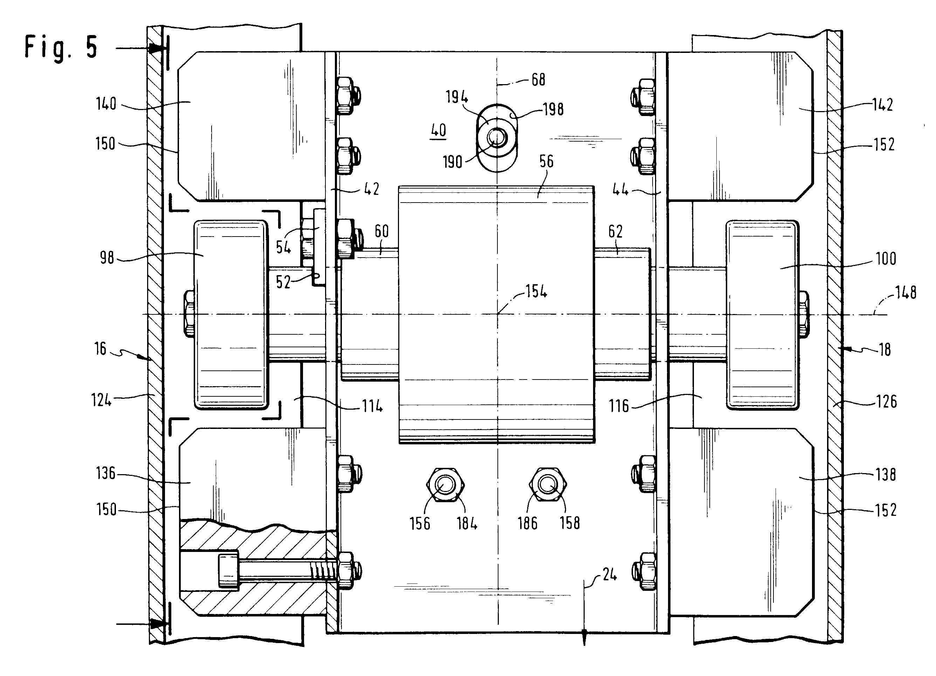

Im Gegensatz zum ersten Ausführungsbeispiel ist zusätzlich im Abstand von den Schrauben 156 und 158 entgegengesetzt zur Förderrichtung 24 eine Schraube 190 vorgesehen, welche mit ihrem Schraubenkopf 192 ebenfalls nahe der Verstärkungseinlage 22 liegt, diese durchgreift und in Richtung des Rollenträgers 12 über die Oberseite 26 des Fördergurts 20 übersteht. Auf diese Schraube 190 ist eine Hülse 194 geschraubt, welche mit ihrer unteren Stirnseite 196 auf der Oberseite 26 des Fördergurts anliegt, so daß zwischen der Hülse 194 und dem Schraubenkopf 192 der zwischen diesen liegende Teil des Fördergurts 20 mit seiner Verstärkungseinlage 22 eingespannt ist und die Hülse 194 fest am Fördergurt 20 fixiert hält. Diese Hülse 194 greift, wie in Fig. 5 dargestellt, in eine Führungsausnehmung 198 ein, welche in der Förderrichtung 24 als Langloch ausgebildet ist, so daß die Hülse 194 in der Führungsausnehmung 198 in Förderrichtung 24 bewegbar ist, jedoch quer zur Förderrichtung 24 den Rollenträger 12 führt, um eine seitliche Verdrehung desselben in dieser Richtung zu verhindern.

Mit dieser Führungsausnehmung 198 ist die Möglichkeit geschaffen, den Fördergurt 20 mit dem Rollenträger 12 im Umlenkbereich über ein Stützrad 14 laufen zu lassen, wobei der Fördergurt 20 auf dem Stützrad anliegend bleibt.

## Patentansprüche

1. Gurtförderer, mit einem Fördergurt (10), der eine sich in Gurtlängsrichtung erstreckende unelastische Verstärkungseinlage (22) aufweist, und mit längs des Fördergurts (10) auf einer Gurtseite angeordneten und mit dem Fördergurt (10) verbundenen Rollenträgern (12), welche in beiderseitig derselben angeordneten Führungsbahnprofilschienen (16, 18) laufende Tragrollen (98, 100) aufweisen,
**dadurch gekennzeichnet,** daß der Rollenträger (12) in Förderrichtung (24) im Abstand voneinander sich an mindestens einer der Führungsbahnprofilschiene (16, 18) abstützende Führungselemente (136, 140; 138, 142) aufweist und daß der Rollenträger (12) an mindestens einer Führungsbahnprofilschiene (16, 18) gegen ein Verdrehen um eine senkrecht auf einer Führungsebene (121) der Führungsbahnprofilschiene (16, 18) stehende Achse (154) und/oder gegen ein Kippen um eine quer zu einer Förderrichtung (24) verlaufende Kippachse (148) durch die Führungselemente (136, 138, 140, 142) gesichert ist.

2. Gurtförderer nach Anspruch 1, dadurch gekennzeichnet, daß beiderseits jedes Rollenträgers (12) zwei in Förderrichtung (24) im Abstand voneinander angeordneten Führungselemente (136, 140; 138, 142) sich so an einer Seitenwange (124, 126) der Führungsbahnprofilschiene (16, 18) abstützen, daß jeder Rollenträger (12) gegen das Verdrehen um eine senkrecht auf einer Führungsebene (121) der Führungsbahnprofilschiene (16, 18) stehende Achse (154) gesichert ist.

3. Gurtförderer nach einem der voranstehenden Ansprüche, dadurch gekennzeichnet, daß die Führungselemente (136, 138, 140, 142) sich auf einer Lauffläche (114, 116) für die Tragrolle (98, 100) abstützen.

4. Gurtförderer nach einem der voranstehenden Ansprüche, dadurch gekennzeichnet, daß der Rollenträger (12) gegen das Kippen um die die geometrische Achse (148) der die Tragrollen (98, 100) tragenden Achse (50) durch die mindestens zwei zusätzlich zu den Tragrollen (98, 100) vorgesehenen Führungselemente (136, 140; 138, 142) gesichert ist

5. Gurtförderer nach einem der voranstehenden Ansprüche, dadurch gekennzeichnet, daß eines der Führungselemente (136, 138) in Förderrichtung (24) vor der Tragrolle (98, 100) angeordnet ist.

6. Gurtförderer nach einem der voranstehenden Ansprüche, dadurch gekennzeichnet, daß eines der Führungselemente (140, 142) in Förderrichtung (24) hinter der Tragrolle (98, 100) angeordnet ist.

7. Gurtförderer nach einem der voranstehenden Ansprüche, dadurch gekennzeichnet, daß der Rollenträger (12) durch die Führungselemente (136, 138, 140, 142) gegen eine Verschiebung quer zur Förderrichtung (24) an den Führungsbahnprofilschienen (16, 18) abgestützt ist.

8. Gurtförderer nach einem der voranstehenden Ansprüche, dadurch gekennzeichnet, daß die Rollenträger (12) mit dem Fördergurt (10) durch mindestens ein die von der Verstärkungseinlage (22) gebildete Ebene (30) im Fördergurt (10) durchgreifendes Verbindungselement (156, 158) im wesentlichen unelastisch verbunden sind.

9. Gurtförderer nach Anspruch 8, dadurch gekennzeichnet, daß das Verbindungselement (156, 158) der Verstärkungseinlage (22) im wesentlichen unmittelbar benachbart im Fördergurt (10) angreift.

10. Gurtförderer nach Anspruch 9, dadurch gekennzeichnet, daß das Verbindungselement (156, 158) im wesentlichen an der Verstärkungseinlage (22) angreift.

11. Gurtförderer nach einem der Ansprüche 8 bis 10, dadurch gekennzeichnet, daß das Verbindungselement (156, 158) ein Klemmteil (160, 162) aufweist und daß mit dem Klemmteil (160, 162) die Verstärkungseinlage (22) eingespannt gehalten ist.

12. Gurtförderer nach Anspruch 11, dadurch gekennzeichnet, daß die Verstärkungseinlage (22) zwischen dem Klemmteil (160, 162) und dem Rollenträger (12) eingespannt gehalten ist.

13. Gurtförderer nach einem der Ansprüche 8 bis 12, dadurch gekennzeichnet, daß das Verbindungselement eine Schraube (156, 158) umfaßt.

14. Gurtförderer nach Anspruch 13, dadurch gekennzeichnet, daß die Schraube (156, 158) mit einem auf die Verstärkungseinlage (22) wirkenden Klemmkopf (160, 162) versehen ist.

15. Gurtförderer nach einem der Ansprüche 8 bis 14, dadurch gekennzeichnet, daß die von der Verstärkungseinlage (22) aufgespannte Ebene (30) asymmetrisch in dem Fördergurt (10) angeordnet ist.

16. Gurtförderer nach Anspruch 15, dadurch gekennzeichnet, daß die Ebene (30) einen geringeren Abstand von der dem Rollenträger (12) zugewandten Gurtseite (26) aufweist als von der gegenüberliegenden dem Rollenträger (12) abgewandten Gurtseite (28).

17. Gurtförderer nach einem der Ansprüche 11 bis 16, dadurch gekennzeichnet, daß der Fördergurt (10) eine Ausnehmung (164, 166) zur vollständigen Aufnahme des Klemmteils (160, 162) aufweist.

18. Gurtförderer nach Anspruch 17, dadurch gekennzeichnet, daß die Ausnehmung (164, 166) zu der dem Rollenträger (12) abgewandten Gurtseite (28) hin offen ist.

## Claims

1. Belt conveyor comprising a conveyor belt (10) with an inelastic reinforcement insert (22) extending in longitudinal direction of the belt, and roller supports (12) arranged along the conveyor belt (10) on one side of the belt and connected with the conveyor belt (10), said roller supports having support rollers (98, 100) running in profiled guideway rails (16, 18) arranged on both sides of said roller supports, characterized in that the roller support (12) has guide elements (136, 140; 138, 142) supported on at least one of the profiled guideway rails (16, 18) and spaced from one another in a direction of conveyance (24) and that the roller support (12) is secured by the guide elements (136, 138, 140, 142) on at least one profiled guideway rail (16, 18) against any rotation about an axis (154) extending at right angles to a guide plane (121) of the profiled guideway rail (16, 18) and/or against any tilting about a tilt axis (148) extending transversely to a direction of conveyance (24).

2. Belt conveyor as defined in claim 1, characterized in that on both sides of each roller support (12) two guide elements (136, 140; 138, 142) arranged in spaced relation to one another in the direction of conveyance (24) are supported on a side wall (124, 126) of the profiled guideway rail (16, 18) such that each roller support (12) is secured against rotation about an axis (154) extending at right angles to a guide plane (121) of the profiled guideway rail (16, 18).

3. Belt conveyor as defined in either of the preceding claims, characterized in that the guide elements (136, 138, 140, 142) are supported on a bearing surface (114, 116) for the support roller (98, 100).

4. Belt conveyor as defined in any of the preceding claims, characterized in that the roller support (12) is secured against tilting about the geometric axis (148) of the shaft (50) bearing the support rollers (98, 100) by the at least two guide elements (136, 140; 138, 142) provided in addition to the support rollers (98, 100).

5. Belt conveyor as defined in any of the preceding claims, characterized in that one of the guide elements (136, 138) is arranged in front of the support roller (98, 100) in the direction of conveyance (24).

6. Belt conveyor as defined in any of the preceding claims, characterized in that one of the guide elements (140, 142) is arranged behind the support roller (98, 100) in the direction of conveyance (24).

7. Belt conveyor as defined in any of the preceding claims, characterized in that the roller support (12) is supported on the profiled guideway rails (16, 18) by the guide elements (136, 138, 140, 142) against any displacement transversely to the direction of conveyance (24).

8. Belt conveyor as defined in any of the preceding claims, characterized in that the roller supports (12) are connected essentially inelastically with the conveyor belt (10) by at least one connecting element (156, 158) passing through the plane (30) formed by the reinforcement insert (22) in the conveyor belt (10).

9. Belt conveyor as defined in claim 8, characterized in that the connecting element (156, 158) engages in the conveyor belt (10) essentially immediately adjacent to the reinforcement insert (22).

10. Belt conveyor as defined in claim 9, characterized in that the connecting element (156, 158) engages essentially on the reinforcement insert (22).

11. Belt conveyor as defined in any of claims 8 to 10, characterized in that the connecting element (156, 158) has a clamping part (160, 162) and that the reinforcement insert (22) is held clamped by the clamping part (160, 162).

12. Belt conveyor as defined in claim 11, characterized in that the reinforcement insert (22) is held clamped between the clamping part (160, 162) and the roller support (12).

13. Belt conveyor as defined in any of claims 8 to 12, characterized in that the connecting element comprises a screw (156, 158).

14. Belt conveyor as defined in claim 13, characterized in that the screw (156, 158) is provided with a clamping head (160, 162) acting on the reinforcement insert (22).

15. Belt conveyor as defined in any of claims 8 to 14, characterized in that the plane (30) defined by the reinforcement insert (22) is arranged asymmetrically in the conveyor belt (10).

16. Belt conveyor as defined in claim 15, characterized in that the plane (30) is at a shorter distance from the side (26) of the belt facing the roller support (12) than from the opposite side (28) of the belt facing away from the roller support (12).

17. Belt conveyor as defined in any of claims 11 to 16, characterized in that the conveyor belt (10) has a recess (164, 166) for completely accommodating the clamping part (160, 162).

18. Belt conveyor as defined in claim 17, characterized in that the recess (164, 166) is open towards the side (28) of the belt facing away from the roller support (12).

## Revendications

1. Transporteur à courroies comprenant une courroie transporteuse (10) qui présente une insertion de renforcement inélastique (22), s'étendant dans la direction longitudinale de la courroie, et des supports de galets (12) disposés le long de la courroie transporteuse (10) sur une face de la courroie, et assemblés a la courroie transporteuse (10), qui présentent des galets porteurs (98, 100) qui circulent dans des profilés (16, 18) d'une voie de guidage qui sont disposés des deux côtés de ces supports,
caractérisé en ce que le support de galets (12) présente des éléments de guidage (136, 140 ; 138, 142) qui prennent appui, à un certain écartement mutuel, sur au moins l'un des profilés (16, 18) de la voie de guidage, et en ce que le support de galets (12) est arrêté par les éléments de guidage (136, 138, 140, 142) sur au moins un profilé (16, 18) de la voie de guidage à l'encontre de la rotation autour d'un axe (154) perpendiculaire à un plan de guidage (121) du profilé (16, 18) de la voie de guidage et/ou à l'encontre du basculement autour d'un axe de basculement (148) s'étendant transversalement au sens (24) du transport.

2. Transporteur à courroie selon la revendication 1, caractérisé en ce que, des deux côtés de chaque support de galets (12), deux éléments de guidage (136, 140 ; 138, 142) disposés à un certain écartement l'un de l'autre dans la direction (24) du transport prennent appui contre une joue latérale (124, 126) du profilé (16, 18) de la voie de guidage, de telle sorte que chaque support de galets (12) est arrêté à l'encontre de la rotation autour d'un axe (154) s'étendant perpendiculairement à un plan de guidage (121) du profilé (16, 18) de la voie de guidage.

3. Transporteur à courroie selon une des revendications précédentes, caractérisé en ce que les éléments de guidage (136, 138, 140, 142) prennent appui sur une surface de roulement (114 ; 116) recevant le galet porteur (98, 100).

4. Transporteur à courroie selon une des revendications précédentes, caractérisé en ce que le support de galets (12) est arrêté à l'encontre du basculement autour de l'axe géométrique (148) de l'axe (50) qui porte les galets porteurs (98, 100), par les au moins deux éléments de guidage (136, 140 ; 138, 142) prévus en supplément des galets porteurs (98, 100).

5. Transporteur à courroie selon une des revendications précédentes, caractérisé en ce qu'un des éléments de guidage (136, 138) est disposé en amont du galet porteur (98, 100) dans le sens (24) du transport.

6. Transporteur à courroie selon une des revendications précédentes, caractérisé en ce qu'un des éléments de guidage (140, 142) est disposé en aval du galet porteur (98, 100) dans le sens (24) du transport.

7. Transporteur à courroie selon une des revendications précédentes, caractérisé en ce que le support de galets (12) est appuyé sur les profilés (16, 18) de la voie de guidage par les éléments de guidage (136, 138, 140, 142) à l'encontre de la translation transversalement au sens (24) du transport.

8. Transporteur à courroie selon une des revendications précédentes, caractérisé en ce que les supports de galets (12) sont reliés de façon sensiblement inélastique à la courroie transporteuse (10) par au moins un élément d'assemblage (156, 158) qui traverse à l'intérieur de la courroie transporteuse (10) le plan (30) formé par l'insertion de renforcement (22).

9. Transporteur à courroie selon la revendication 8, caractérisé en ce que l'élément d'assemblage (156, 158) attaque l'insertion de renforcement (22) à l'intérieur de la courroie transporteuse (10) en un point sensiblement directement adjacent.

10. Transporteur à courroie selon la revendication 9, caractérisé en ce que l'élément d'assemblage (156, 158) attaque sensiblement l'insertion de renforcement (22).

11. Transporteur à courroie selon une des revendications 8 à 10, caractérisé en ce que l'élément d'assemblage (158, 158) présente une partie de serrage (160, 162) et en ce que l'insertion de renforcement (22) est maintenue serrée avec la partie de serrage (160, 162).

12. Transporteur à courroie selon la revendication 11, caractérisé en ce que l'insertion de renforcement (22) est tenue serrée entre la partie de serrage (160, 162) et le support de galets (12).

13. Transporteur à courroie selon une des revendications 8 à 12, caractérisé en ce que l'élément d'assemblage comprend une vis (156, 158).

14. Transporteur à courroie selon la revendication 13, caractérisé en ce que la vis (156, 158) est munie d'une tête de serrage (160, 162) qui agit sur l'insertion de renforcement (22).

15. Transporteur à courroie selon une des revendications 8 à 14, caractérisé en ce que le plan (30) couvert par l'insertion de renforcement (22) est disposé asymétriquement dans la courroie transporteuse (10).

16. Transporteur à courroie selon la revendication 15, caractérisé en ce que le plan (30) se trouve à une plus petite distance de la face (26) de la courroie qui est dirigée vers le support de galets (12) que de la face opposée (28) de la courroie qui est la plus éloignée du support de galets (12).

17. Transporteur à courroie selon une des revendications 11 à 16, caractérisé en ce que la courroie transporteuse (10) présente un évidement (164, 166) destiné à enfermer entièrement la partie de serrage (160, 162).

18. Transporteur à courroie selon la revendication 17, caractérisé en ce que l'évidement (164, 166) s'ouvre sur la face (28) de la courroie qui est la plus éloignée du support de galet (12).
